# EUROPEAN PATENT SPECIFICATION

(11) **EP 2 189 208 B1**
(45) Date of publication and mention of the grant of the patent: **18.05.2011**
(21) Application number: 09181002.8
(22) Date of filing: 27.01.2006
(51) Int. Cl.: B01D 61/08, B01D 61/10

(54) **Filter cartridge for water treatment system**
Filterkartusche zur Wasserbehandlung
Cartouche de filtre pour le traitement de l'eau

(30) Priority: 27.01.2005 US 647680 P
(43) Date of publication of application: 26.05.2010
(62) Divisional of application: 06734034.9
(73) Proprietor: EcoWater Systems, LLC, Woodbury, MN 55125 (US)
(72) Inventor: Kennedy, Gregory, Maplewood, MN 55177 (US); Sinkula, David, Coon Rapids, MN 55433 (US); Zimmerman, Jeffrey, Forest Lake, MN 55025 (US); Khamis, Chaouki, Edina, MN 54424 (US); Stoick, Michael, New Market, MN 55054 (US); Duscheck, Nathan, Hammond, WI 64015 (US)
(74) Representative: Zeitler - Volpert - Kandlbinder

(56) References cited:
- EP-A- 0 231 862
- US-A- 4 645 601
- US-A- 4 956 086
- US-B1- 6 533 931

## Description

### FIELD OF INVENTION

The present invention relates to water treatment systems and, in particular, to such systems having an encapsulated manifold head and a reverse osmosis cartridge and one or more filter cartridges.

### BACKGROUND OF THE INVENTION

Reverse osmosis systems are known. The main part of the system is a semi-permeable membrane through which the untreated water passes. Such systems typically include an additional carbon or ceramic filter which removes contaminates either prior to passing through the membrane or after. Such systems are often installed in residential applications.

The prior art includes electronic systems which detect when the reverse osmosis membrane requires replacement. Typical prior art systems include measuring the conductivity of the water entering the reverse osmosis cartridge, and then measuring the conductivity of the water at the outlet of the reverse osmosis cartridge. The conductivity of the water is proportional to the total dissolved solids. A ratio of the conductivity levels will provide an indication of the rejection efficiency of the reverse osmosis membrane.

Prior art systems also include an application wherein a permeate pump is included in a factory installation. The permeate pump provides greater efficiency in the system. The permeate pump increases the net pressure across the reverse osmosis membrane by isolating the membrane pressure from the pressure in the products water and thus reducing the permeate back pressure.

The prior art also includes systems which address reducing the spillage of fluid occurring during replacement of the cartridges.

### SUMMARY OF THE INVENTION

It is an object of the present invention to provide an improved locking mechanism for a filter cartridge and manifold head.

It is a further object of the present invention to provide an improved method of monitoring the performance of a reverse osmosis membrane in a drinking water supply system.

It is further object of the present invention to provide a modular manifold head system.

It is an object of the present invention to provide a system for retrofitting a reverse osmosis filter system to include a permeate pump application.

It is an object of the present invention to provide a cartridge which has a reduced inlet opening to reduce spillage during changing of the cartridge.

### BRIEF DESCRIPTION OF THE DRAWINGS

Fig. 1 is a perspective view of a water treatment system with a reverse osmosis cartridge and two filter cartridges.
Fig. 2 is a perspective view of a filter cartridge of Fig. 1.
Fig. 3 is a top view of the filter cartridge of Fig. 2.
Fig. 4 is an exploded view of the filter cartridge of Fig. 2.
Fig. 5 is a bottom perspective view of a manifold head incorporated in the water treatment system of Fig. 1.
Fig. 6 is a block diagram of a reverse osmosis membrane monitoring system.
Fig. 7 is a process flow chart for the system of Fig. 6.
Fig. 8 is a perspective view of a modular manifold head system.
Fig. 9 is top perspective view of a modular manifold head.
Fig. 10 is a schematic diagram of a reverse osmosis water treatment system with a permeate pump.
Fig. 11 is a cross-sectional view of the modular manifold head and cartridges of Fig. 1.
Fig. 12 is a top perspective view of a modular manifold head in a permeate pump application.

### DETAILED DESCRIPTION OF THE INVENTION

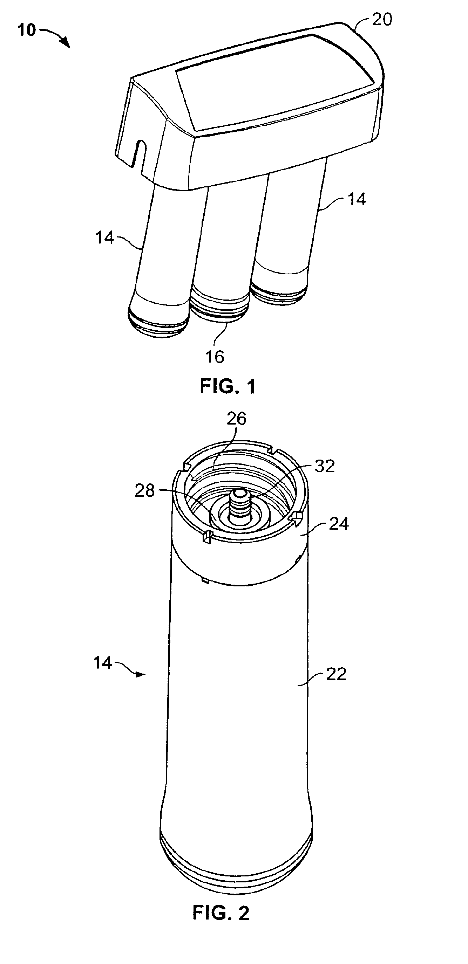

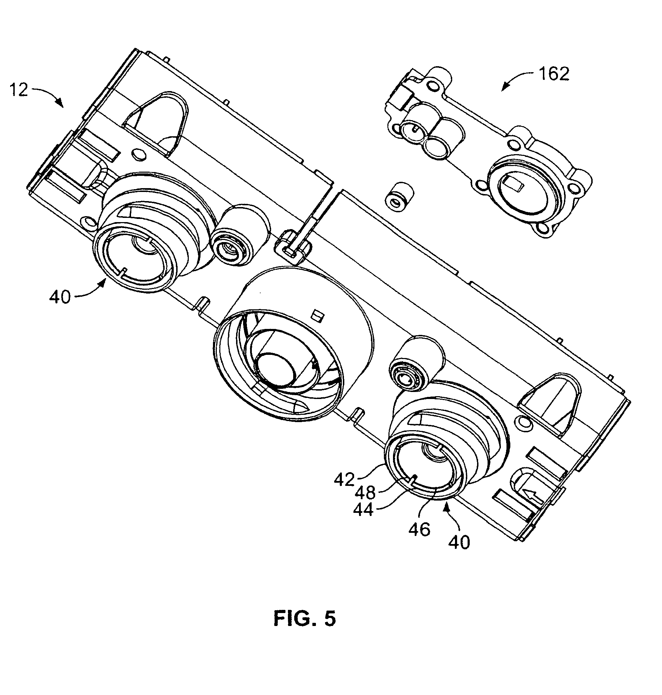

Fig. 1 shows one embodiment of a water treatment system 10 in accordance with the present invention. The system includes a manifold head 12, (see Fig. 5) a first filter cartridge 14, a reverse osmosis cartridge 16 and a second filter cartridge 14. A manifold cover 20 is also shown.
Fig. 2 shows a filter cartridge 14 in accordance with the present invention. The filter cartridge 14 includes a housing 22 having an outer annular collar 24 with a double lead thread 26. An inner annular collar 28 is also shown which includes an O ring 30 to provide a seal. A connection fitting 32 is shown extending through the annular collar 28.

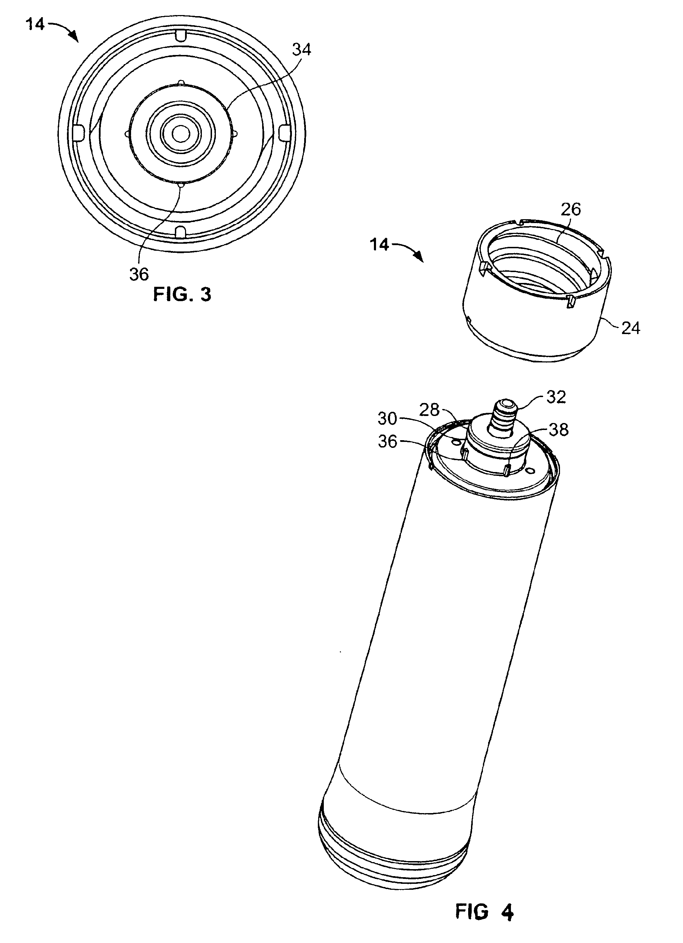

Fig. 3 shows a top view of the filter cartridge 14 and shows the cylindrical wall 34 of the inner annular collar 28, as well as the longitudinal extending bead 36.
Fig. 4 shows the filter cartridge 14 in an exploded view so as to more clearly show the longitudinal extending bead 36. It can be seen that the longitudinal extending bead 36 includes a leading end 38.
Fig. 5 shows the manifold head 12 having the filter cartridge connection fitting 40. The filter cartridge connection fitting 40 includes a threaded outer annular collar 42 and an inner annular collar 44. The inner annular collar 44 having an annular lip 46 and four longitudinal slots 48. The longitudinal slots 48 are equally spaced apart from one another.

It will be appreciated that when the filter cartridge 14 is rotated into a fully secured position onto the connection fitting 40, the filter cartridge 14 comes to rest with the longitudinal extending beads 36 being received by the respective slot 48.

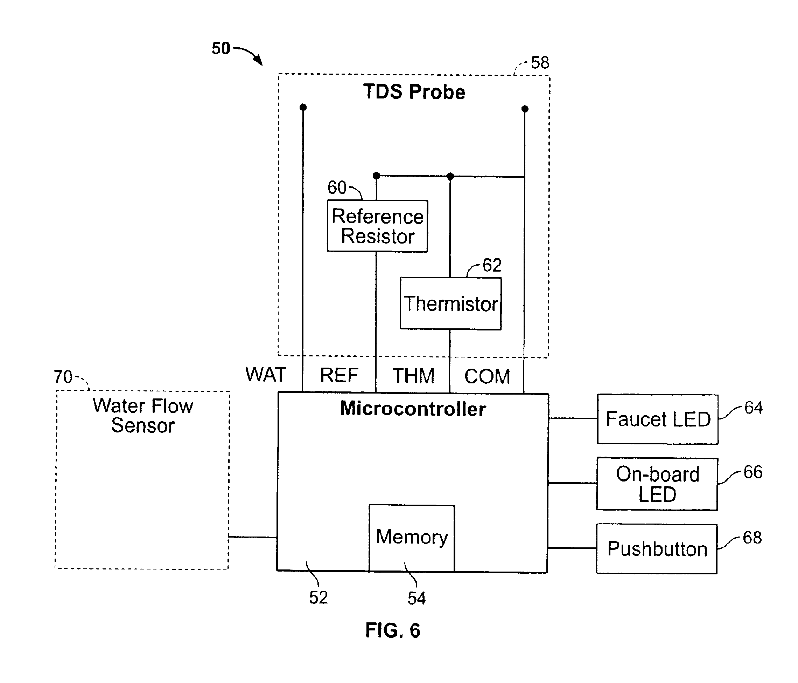

Fig. 6 shows a block diagram of a system 50 for monitoring the performance of a reverse osmosis membrane. The system 50 includes a microcontroller 52 having a memory 54 wherein a program resides. The system 50 includes a single probe set 58 which is located downstream of the reverse osmosis membrane. The probe set 58 includes a reference resistor 60 and a thermal resistor 62. The microcontroller 52 is coupled to a faucet LED 64 for providing an indication to replace the reverse osmosis cartridge. The microcontroller 52 is also coupled to an onboard LED 66 for feedback during operation of an onboard push button 68 also coupled to the microcontroller 52. A water flow sensor 70 is also coupled to the microcontroller 52.

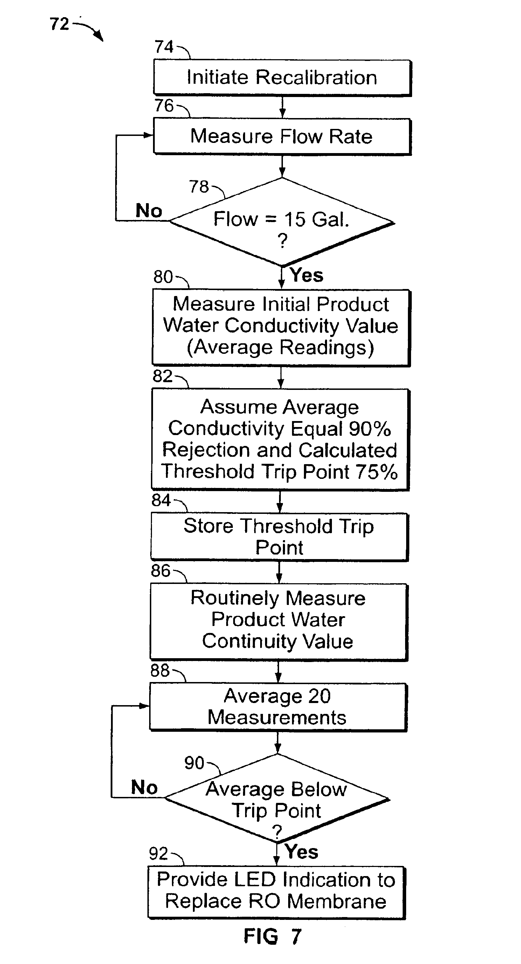

Fig. 7 shows a block diagram 72 which represents the functional steps as executed by the program resident in the memory 54.

Step 74 provides the initiate recalibration routine. The initiate recalibration routine occurs after the reverse osmosis membrane has been replaced and after a power on routine occurs. At step 76, the system measures the flow of water through the system. At step 78, the system determines or detects the flow of fifteen gallons of water through the system. At step 80, the system measures the initial water conductivity downstream of the reverse osmosis membrane. In one embodiment, step 80 the initial product water conductivity value is based on averaging approximately 10-50 water conductivity measurements. At step 82, the product water conductivity value or average conductivity is assumed to equal a 90% rejection. Step 82 then calculates a threshold trip point based on 75% rejection. Step 84 stores the threshold trip point. Step 86 consists of routinely measuring the product water conductivity value. Step 88 consists of averaging the previous twenty measurements of the water conductivity. At Step 90, it is determined whether the average of step 88 is below the threshold trip point of step 84. In the event the average is below the threshold trip point, the system proceeds to step 92 which provides an LED indication to replace the reverse osmosis membrane.

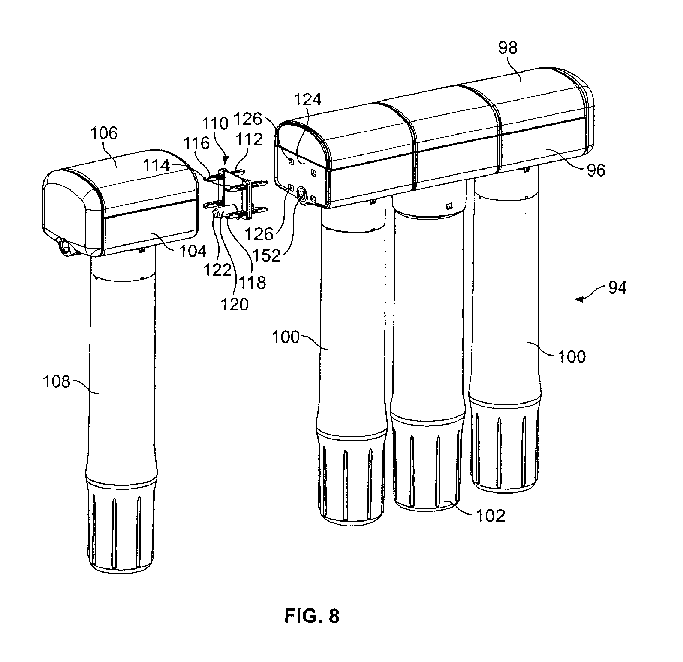

Figure 8 is an embodiment of a modular water treatment system 94. The water treatment system 94 shown in Fig. 8 includes a modular manifold head 96, a manifold cover 98, a first filter cartridge 100, a reverse osmosis cartridge 102 and a second filter cartridge 100. Also shown is a further modular manifold head 104 and cover 106, as well as an additional cartridge unit 108. The system of Fig. 8 provides a modular system wherein additional modular manifold units 104, 106, 108 may be coupled to the water treatment system 94 via a clip 110. The clip 110 includes a plurality of arms 112 extending from a planar body portion 114. Each arm 112 includes a slot 116 and a slanted leading edge 118. The clip 110 also includes a tubular portion 120 extending through the main body portion 114. The tubular portion 120 includes a bore 122 extending throughout the tubular portion 120.

Each manifold 12, 96, 104 includes an end wall 124 having four openings 126.

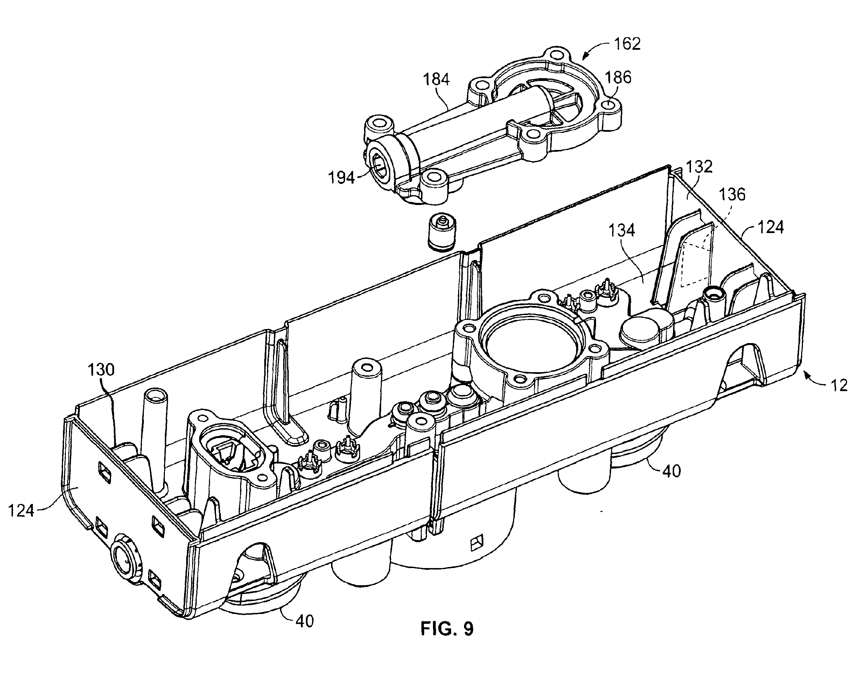

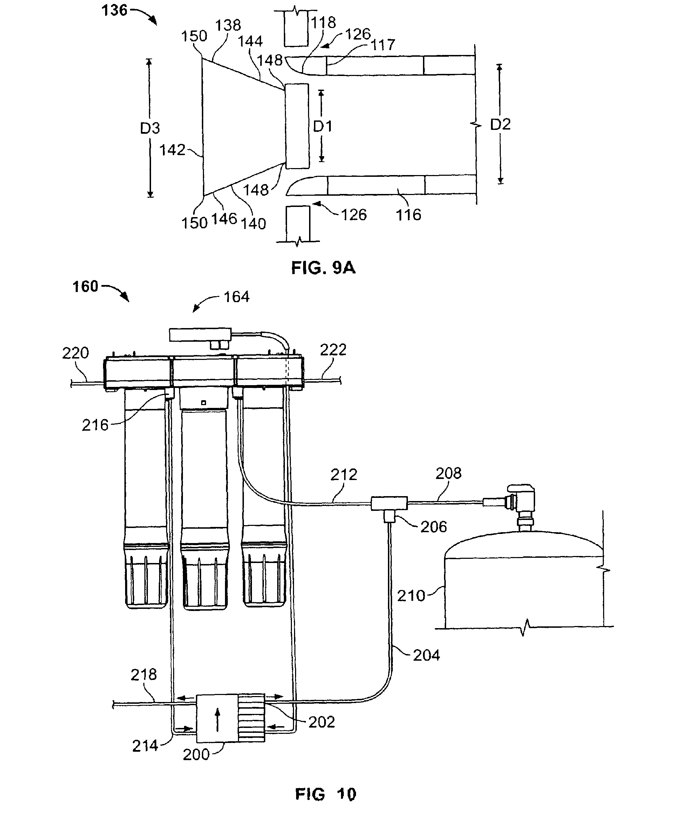

Fig. 9 shows a perspective view of the manifold 12 including the two end walls 124 each having four openings 126. The openings 126 are arranged in pairs, one above the other. For example, lower opening 126 and upper opening 126 comprise one pair. Each pair of openings 126 includes a pair of upright walls 130 in a spaced apart facing relationship. The upright walls 130 are shown extending from the interior surface 132 of the end wall 124 and the lower surface 134 of the manifold head 12. A flange 136 extends from the inner surface 132 of the end wall 124 towards the interior compartment of the manifold head 12. The flange 136 includes an upper ramp 138 and a lower ramp 140. The flange 136 includes a forward edge 142 and first and second side edges 144, 146. The forward edge 142 is generally parallel to the end wall 124. The first side edge 144 and second side edge 146 form the upper ramp and lower ramp 138, 140. The upper ramp 138 and lower ramp 140 diverge from one another in a direction away from the inner interior surface 132 towards the interior compartment of the manifold head 12. One of the four flanges 136 is shown in phantom in Fig. 9. The ramps 138, 140 include a proximal end 148 and a distal end 150. The proximal end 148 is located slightly away from the edge of the opening 126. The distal end 150 is spaced in an interference relationship regarding alignment of the opening 126. Fig. 9A shows additional detail.

With reference to Fig. 8, it will be appreciated that as the clip 110 is inserted into the openings 126 of the manifold head 96 to the right of the figure, the slanted edge 118 of each of the resilient arms 112 will be deflected by the respective ramp 138, 140. Once the clip 110 is fully inserted through the four openings 126, the slot 116 will extend past the distal end 150 and the two arm pairs will clamp about the respective distal end 150 with the edge of the slot 116 coming into locking engagement with the distal end 150 of the ramp 138, 140. Meanwhile, the tubular portion 120 will be received by the tube fitting connector 152 for sealing engagement. The other modular manifold head 104 will be coupled in similar manner.

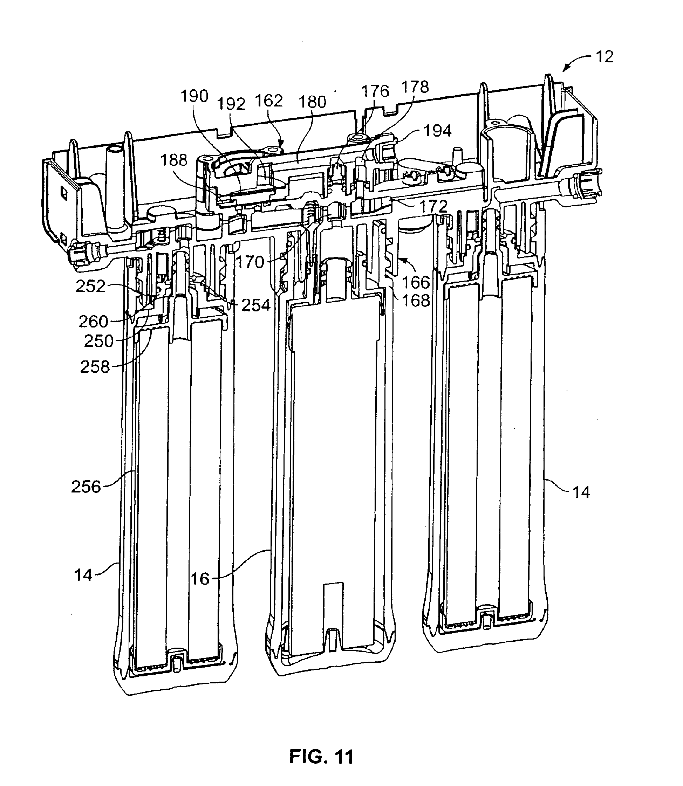

Fig. 10 shows a graphical representation of a water treatment system 160 wherein an automatic shut-off valve cover 162 (see Figs. 5 and 9) may be removed and replaced with another cover 164 adapted to accommodate a permeate pump application. With reference to Fig. 11, a cross-section of a water treatment system is shown including the modular manifold head 12, first cartridge 14, reverse osmosis cartridge 16 and second filter cartridge 14. The manifold head 12 is shown to include a connection fitting 166 for receiving the respective connection fitting 168 of the reverse osmosis cartridge 16. The manifold head 12 includes a first manifold access port 170 for coupling to an output of a reverse osmosis cartridge 16, a second manifold access port 172 coupled to an output of a reverse osmosis stage. A non-permeate pump cover 162 is adapted to seal the first and second access ports 170, 172 for a non-permeate pump application. A permeate pump cover 164 is adapted to also seal the first and second access ports 170, 172 and includes a permeate pump output port 174 which receives a tube fitting connector 175. The permeate pump cover 164 includes a first access and a second access port 176, 178 and a flow channel 180 in communication with the first and second access ports, as well as the permeate pump output port 174. A check valve assembly is located in the first access port 176 for coupling the output of the reverse osmosis cartridge 16. The second cover 164 includes a substantially planer body portion 184 which defines a first end and a second end. Mounting holes 186 are provided for fastening the cover to the manifold head.

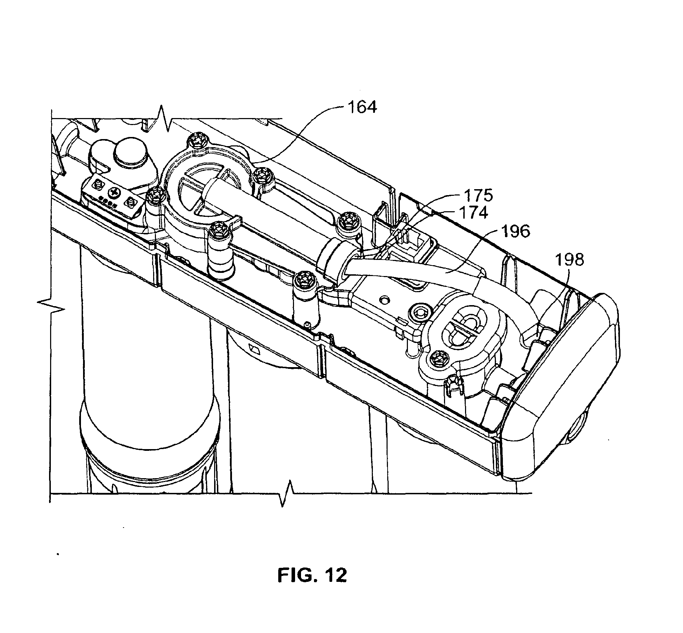

The manifold includes a lower diaphragm receptacle portion 188 having an opened upper portion. The second cover 164 includes an upper diaphragm receptacle portion 190 for mating with the opened upper portion to form a diaphragm cavity which receives a diaphragm. The upper diaphragm receptacle portion 190 includes an opening 192 in fluid communication with the fluid channel 180. The manifold head includes a flow channel coupled to an output port of a pre-filter stage and an input port of the reverse osmosis stage, wherein the flow channel is in fluid communication with the lower diaphragm receptacle portion 188 of the manifold head. It will appreciated that the water treatment system may be assembled at the factory with a non-permeate pump cover 162, wherein the plug 194 is provided at the permeate pump output port 174. A retrofit kit may be provided wherein the first cover 162 is removed and replaced with the second cover 164 having the tube fitting connector 175. A quarter inch tubing 196 may then be coupled to the tube fitting connector 175 and extend through a routing hole 198 as shown in Fig. 12. The tubing 196 extends downward and to a permeate pump 200 as shown in Fig. 10. The permeate pump 200 has a permeate outport 202 having a tubing 204 which runs to a T-connector 206. The T-connector 206 has a further tubing 208 coupled to a storage tank 210, as well a tubing 212 coupled back to the manifold head. The brine side of the permeate pump includes a brine in 214 from the drain flow 216 of the manifold head and a brine out tubing 218 which couples to the drain point. For sake of completeness, the tubing 220 is also shown coming from the supply inlet and tubing 222 is shown going to the faucet.

The installation kit includes at a minimum the second cover 164 and further may include a replacement check valve, as well replacement O rings, tubing, fasteners and installation instructions.

Fig. 11 also shows the filter cartridge 14 having a reduced gap at the connection fitting 32 in order to minimize spillage during changing of the filter cartridge. The novel features of the filter cartridge are explained below. However, it will be apparent that the features can be incorporated into the reverse osmosis cartridge as well.

The filter cartridge 14 includes external cartridge housing 22 having a cylindrical portion with a top portion and a bottom portion. The bottom portion has a closed end. The top portion includes a shoulder 250 having a generally cylindrical neck portion 252 extending upward from the shoulder 250. The cylindrical neck portion 252 defines a portion of a connection fitting. The cylindrical neck portion 252 defines a cylindrical bore having a cylindrical bore wall which defines a first diameter. The cylindrical bore wall includes an annular ring 254 protruding from the wall and defining a second diameter which is smaller than the first diameter. An internal cartridge housing 256 includes a top portion with a shoulder 258, a tube portion 260 extending upward from the internal shoulder 258, and the tube portion 260 defining an outlet bore. The tube portion 260 defines an outer diameter having a third diameter, wherein the third diameter is smaller than the first and second diameter. The tube portion 260 and the annular ring 254 define a cartridge inlet having an annular gap. It will be appreciated that the annular gap is minimized by this design and thereby reduces the likelihood of spillage. The manifold head is adapted to conform with the filter cartridge 14. In particular, the manifold head includes a connection fitting 40 which includes an internal annular collar having a length defined such that when the cartridge 14 is assembled to the manifold, the internal annular collar extends around the tube portion 260 and up to the annular ring, with a minimum spacing for tolerance.

It is thus proposed according to the invention a cartridge 14 which has a reduced inlet opening to reduce spillage during changing of the cartridge.

It is also proposed according to the invention a locking mechanism for an encapsulated manifold and cartridge, the locking mechanism comprising
an encapsulated manifold 12 having a connection fitting 40, the connection fitting 40 having a threaded outer annular collar 42 and an inner annular collar 44, the inner annular collar 44 having an annular lip 46 and at least one longitudinal slot 48 extending from the lip 46) along a portion of the annular collar 44; and
a cartridge (14) having a connection fitting 32, the connection fitting 32 having a threaded outer annular collar 24 for mating with the threaded outer annular collar 42 of the manifold 12, the connection fitting 32 of the cartridge 14 also having a cylindrical wall 34 located within the threaded outer annular collar 24 of the cartridge 14, the cylindrical wall 34 having at least one longitudinal extending bead 36 which is received by the respective slot 48 upon the cartridge 14 being threadingly fastened to the manifold to a fully secured position.

According to a particular feature, the longitudinal extending bead 36 engages the annular lip 46 approximately 1/8 of a turn prior to the fully secured position.

According to a particular feature, the manifold 12 includes four longitudinal slots 48 extending from the lip 46 along a portion of the annular collar 44 and equally spaced apart circumferentially about the annular collar 44, and the cartridge 14 includes four longitudinal extending beads 36 extending along the cylindrical wall 34, the four longitudinal extending beads 36 are equally spaced about the cylindrical wall 34, each of the longitudinal extending beads 36 is adapted to be received by a respective slot 48 with the cartridge 14 in the fully secured position.

It is also proposed according to the invention a modular system for coupling water filter manifold heads, the system comprising (as illustrated in Figures 8-9A):
a first and second manifold head 96, 104, each manifold head having a first side 124 and a manifold head cavity, the first side 124 including a pair of ramps 138, 140, each ramp having a first end and a second end, with a ramp edge 144, 146 defined between the first end and second end, the pair of ramps arranged in an opposed and outwardly facing relationship, with the first ends 148 adjacent the first side 124 and the second ends 150 extending away from the first side 124 inward within the manifold head cavity, the first ends 148 of the pair of ramps 138, 140 defining a distance D1, and the second ends 150 of the pair of ramps 138, 140 defining a distance D3, wherein the distance D3 is greater than the distance D1, the pair of ramps 138, 140 each defining, at the second end 150, a locking edge extending in a direction which diverge; and
a clip 110 having a body 114, a first pair of arms 112 extending from the body 114 in a generally first direction, and a second pair of arms 112 extending from the body 114 in a generally opposite direction, each pair of arms 112 having a latch 117 at a distal end, each pair of latches 117 define a distance D2, wherein D1 is less than or equal to D2 which is less than or equal to D3.

It is also proposed according to the invention an installation kit for replacing an automatic shutoff valve cover previously assembled on a manifold head of a water treatment system, wherein the manifold head includes a first access port adapted to be coupled to an output of a reverse osmosis cartridge, a second access port coupled to an output of the reverse osmosis stage, the kit comprising (as illustrated in figures 10-11):
a cover 164 having a cover first access port 170, a cover second access port 172, and having a permeate pump output port 174 with a tube fitting connector 175 for permeate pump application.

According to a particular feature, the installation kit further comprises a check valve assembly adapted to be received in the cover first access port 170.

According to a particular feature, the cover includes a substantially planar body portion having a fluid channel which extends longitudinally within the planar body portion, wherein one end of the body portion includes the permeate pump output port with the tube fitting connector, the cover second access port adjacent the tube fitting connector and the cover first access port is adjacent the cover second access port on a side opposite from the tube fitting connector.

According to a particular feature, the installation kit further comprises replacement O-rings for the cover first and second access ports 176, 178.

## Claims

1. A water treatment system comprising:
a filter cartridge (14) having:
an external cartridge housing (22), the housing (22) having a cylindrical portion with a top portion and a bottom portion, the bottom portion having a closed end, the top portion having a shoulder (250) with a generally cylindrical neck portion (252) extending upward from the shoulder (250), the cylindrical neck portion (252) defining a portion of a connection fitting, the cylindrical neck portion (252) defining a cylindrical bore having a cylindrical bore wall which defines a first diameter, the cylindrical bore wall having an annular ring (254) protruding from the wall and defining a second diameter which is smaller than the first diameter;
an internal cartridge housing (256) within the external cartridge housing (22) and having a top portion with a shoulder (258), a tube portion (260) extending upward from the internal shoulder, the tube portion (260) defining an outlet bore, the tube portion (260) defining an outer diameter having a third diameter, the third diameter is smaller than the first and second diameters, the tube portion (260) and the annular ring (254) define a cartridge inlet having an annular gap.

2. The system of claim 1, further comprising a manifold head (12) having a connection fitting which includes an internal annular collar having a length defined such that with the cartridge assembled to the manifold, the internal annular collar extends around the tube portion and extends adjacent the annular ring.

3. The filter cartridge of the system of claim 1.

4. The filter cartridge of claim 3, wherein the external cartridge housing (22) includes a top end, a bottom end, and a filter portion extending longitudinally between said top end and said bottom end, said filter portion including a housing wall having an inside surface and an outside surface;
said top end including:
a shoulder, said shoulder and said housing wall inside surface forming an inner annular groove peripheral about said top end; and
a neck portion extending longitudinally beyond said shoulder and having at least one longitudinal bead on said neck portion extending outwards in the direction of said outside surface, said neck portion having an aperture for fluid flow;
and wherein the internal cartridge housing (256) has a protruding portion extending through said aperture of said neck portion and forming an annular gap with said aperture of said neck portion to allow fluid flow, said protruding portion of said internal cartridge housing having an aperture for fluid flow.

5. The filter cartridge of claim 4 including an outer annular collar (24) releasably attachable in said filter cartridge having a bottom lip for insertion within said inner annular groove of said filter cartridge.

6. The filter cartridge of claim 5 including said outer annular collar (24) having a double lead thread (26) on an inner surface to releasably attach to a filter manifold.

7. The filter cartridge of claim 4 wherein said top end includes an annular lip on said housing wall with at least one longitudinal slot formed therein.

8. The filter cartridge of claim 4 wherein said top end includes an annular lip on said housing wall with a plurality of longitudinal slots formed therein and equally spaced apart from one another.

9. The filter cartridge of claim 4, further comprising an outer annular collar (24) having an outside surface, and inside surface, a top end, and a bottom end, said outer annular collar releasably attachable in the filter cartridge on said outer annular collar bottom end and releasably attachable to a manifold (12) on said outer annular collar top end, said outer annular collar (24) comprising:
a double lead thread (26) on said inside surface adapted to mate with a corresponding outer threaded connector on said manifold (12); and
an extended lip portion on said outer annular collar bottom end for mating with an annular groove on said external cartridge housing (22).

10. The filter cartridge of claim 9 wherein said double lead thread (26) includes a circumference, a first thread, and a second thread, said first and second threads being interwoven and extending around approximately said circumference, wherein said first thread is offset from said second thread.

11. The filter cartridge of claim 10 wherein said first thread is offset from said second thread by approximately 180 degrees.

## Patentansprüche

1. Wasserbehandlungssystem mit einem äußeren Hülsengehäuse (22), das einen zylindrischen Teil mit einem Kopfteil und einem Bodenteil aufweist, wobei der Bodenteil ein geschlossenes Ende hat und der Kopfteil mit einer Schulter (250) mit einem im allgemeinen zylindrischen Halsteil (252) versehen ist, der sich von der Schulter (250) nach oben erstreckt, wobei ferner der zylindrische Halsteil (252) einen Teil eines Anschlußfittings bildet, der zylindrische Halsteil (252) eine zylindrische Bohrung begrenzt, die mit einer zylindrischen Bohrungswand versehen ist, welche einen ersten Durchmesser hat, die zylindrische Bohrungswand einen runden Ring (254) aufweist, der von der Wand absteht und einen zweiten Durchmesser bildet, welcher kleiner ist als der erste Durchmesser; ferner mit einem inneren Hülsengehäuse (256) innerhalb des äußeren Hülsengehäuses (22), das einen Kopfteil mit einer Schulter (258) aufweist und einen Rohrteil (260), der sich von der inneren Schulter nach oben erstreckt und eine Austrittsbohrung bildet, wobei der Rohrteil (260) einen Außendurchmesser mit einem dritten Durchmesser hat, der kleiner ist als der erste und der zweite Durchmesser, und wobei der Rohrteil (260) und der runde Ring (254) einen Hülseneinlaß mit einem Ringspalt aufweisen.

2. System nach Anspruch 1, ferner umfassend einen Verteilerkopf (12) mit einem Anschlußfitting, der einen inneren, ringförmigen Kragen mit einer Länge aufweist, die derart begrenzt ist, daß dann, wenn die Hülse mit dem Verteiler zusammengebaut ist, sich der innere, ringförmige Kragen rund um den Rohrteil erstreckt und bis neben den runden Ring reicht.

3. Filterhülse des Systems von Anspruch 1.

4. Filterhülse nach Anspruch 3, bei dem das äußere Hülsen-Gehäuse (22) ein oberes Ende, ein unteres Ende und einen Filterteil aufweist, der sich in Längsrichtung zwischen dem oberen Ende und dem unteren Ende erstreckt und eine Gehäusewand aufweist, die mit einer inneren Oberfläche und einer äußeren Oberfläche versehen ist; wobei ferner das obere Ende folgendes umfaßt:
eine Schulter, die zusammen mit der Gehäusewand-Innenoberfläche eine innere ringförmige Nut bildet, die umfänglich um das obere Ende läuft; und
einen Halsteil, der sich in Längsrichtung über die Schulter hinaus erstreckt und wenigstens eine längliche Wulst aufweist, welche in Richtung der äußeren Oberfläche nach außen läuft, wobei der Halsteil mit einer Öffnung für den Fluidfluß versehen ist;
wobei das innere Hülsengehäuse (256) einen vorstehenden Teil aufweist, der sich durch die Öffnung des genannten Halsteils erstreckt und einen Ringspalt mit der Öffnung dieses Halsteils bildet, um den Fluidfluß zu ermöglichen, und wobei der vorstehende Teil des inneren Hülsengehäuses mit einer Öffnung für den Fluidfluß versehen ist.

5. Filterhülse nach Anspruch 4, mit einem äußeren ringförmigen Kragen (24), der in der Filterhülse lösbar anbringbar ist und eine untere Lippe zum Einstecken in die innere ringförmige Nut der Filterhülse aufweist.

6. Filterhülse nach Anspruch 5, **dadurch gekennzeichnet, daß** der äußere ringförmige Kragen (24) zur lösbaren Befestigung an einem Filterverteiler auf einer inneren Oberfläche einen doppelten Bleigang (26) aufweist.

7. Filterhülse nach Anspruch 4, **dadurch gekennzeichnet, daß** das obere Ende auf der Gehäusewand eine ringförmige Lippe aufweist, in der wenigstens ein Längsschlitz ausgebildet ist.

8. Filterhülse nach Anspruch 4, **dadurch gekennzeichnet, daß** das obere Ende auf der Gehäusewand eine ringförmige Lippe aufweist, in der mehrere längliche Schlitze ausgebildet sind, die in gleichem Abstand nebeneinander liegen.

9. Filterhülse nach Anspruch 4, des weiteren umfassend einen äußeren ringförmigen Kragen (24), der eine Außenseiten-Oberfläche aufweist, eine Innenseiten-Oberfläche, ein Kopfende und ein Bodenende, wobei der äußere ringförmige Kragen in der Filterhülse auf dem äußeren ringförmigen Kragenbodenende lösbar anbringbar ist sowie auf dem äußeren ringförmigen Kragenkopfende an einem Verteiler (12) lösbar anbringbar ist, wobei dieser äuβere ringförmige Kragen (24) folgendes umfaßt:
ein doppeltes Bleigewinde (26) auf der inneren Oberfläche, das mit einem entsprechenden äußeren Gewindeanschluß auf dem Verteiler (12) zusammenwirken kann; und
einen verlängerten Lippenteil auf dem äußeren ringförmigen Kragenbodenende, der mit einer ringförmigen Nut auf dem äußeren Hülsengehäuse (22) zusammenpaßt.

10. Filterhülse nach Anspruch 9, **dadurch gekennzeichnet, daß** das doppelte Bleigewinde (26) mit einem ersten Umfang versehen ist, ferner ein erstes Gewinde und ein zweites Gewinde aufweist, wobei das erste Gewinde und das zweite Gewinde miteinander verbunden sind und sich rund um annähernd den Umfang erstrecken und wobei das erste Gewinde gegenüber dem zweiten Gewinde versetzt ist.

11. Filterhülse nach Anspruch 10, **dadurch gekennzeichnet, daß** das erste Gewinde in Bezug auf das zweite Gewinde um annähernd 180 ° versetzt ist.

## Revendications

1. Système de traitement d'eau, comprenant :
une cartouche de filtre (14) ayant :
un boîtier de cartouche extérieur (22), le boîtier (22) ayant une portion cylindrique avec une portion de sommet et une portion de fond, la portion de fond ayant une extrémité fermée, la portion de sommet ayant un épaulement (250) avec une portion de collet généralement cylindrique (252) s'étendant vers le haut depuis l'épaulement (250), la portion de collet cylindrique (252) définissant une portion d'un raccord de connexion, la portion de collet cylindrique (252) définissant un trou cylindrique ayant une paroi cylindrique qui définit un premier diamètre, la paroi cylindrique du trou ayant une bague annulaire (254) en projection depuis la paroi et définissant un second diamètre qui est plus petit que le premier diamètre ;
un boîtier de cartouche intérieur (256) à l'intérieur du boîtier de cartouche extérieur (22) et ayant une portion de sommet avec un épaulement (258),
une portion de tube (260) s'étendant vers le haut depuis l'épaulement intérieur, la portion de tube (260) définissant un trou de sortie, la portion de tube (260) définissant un diamètre extérieur avec un troisième diamètre, le troisième diamètre étant inférieur au premier et au second diamètre, la portion de tube (260) et la bague annulaire (254) définissant une entrée de cartouche ayant un intervalle annulaire.

2. Système selon la revendication 1, comprenant en outre une tête de collecteur (12) ayant un raccord de connexion qui inclut un collier annulaire interne ayant une longueur définie de telle façon que lorsque la cartouche est assemblée sur le collecteur, le collier annulaire interne s'étend autour de la portion de tube et s'étend en position adjacente à la bague annulaire.

3. Cartouche de filtre du système selon la revendication 1.

4. Cartouche de filtre selon la revendication 3, dans laquelle le boîtier de cartouche extérieur (22) inclut une extrémité de sommet, une extrémité de fond, et une portion de filtre s'étendant longitudinalement entre ladite extrémité de sommet et ladite extrémité de fond, ladite portion de filtre incluant une paroi de boîtier ayant une surface intérieure et une surface extérieure ;
ladite extrémité de sommet incluant :
un épaulement, ledit épaulement et ladite surface intérieure de la paroi de boîtier formant une gorge annulaire intérieure périphérique autour de ladite extrémité de sommet ; et
une portion de collet s'étendant longitudinalement au-delà dudit épaulement et ayant au moins un bourrelet longitudinal sur ladite portion de collet s'étendant vers l'extérieur dans la direction de ladite surface extérieure, ladite portion de collet ayant une ouverture pour l'écoulement d'un fluide ;
et dans lequel le boîtier de cartouche intérieur (256) possède une portion en projection s'étendant à travers ladite ouverture de ladite portion de collet et formant un intervalle annulaire avec ladite ouverture de ladite portion de collet pour permettre l'écoulement d'un fluide, ladite portion en projection dudit boîtier de cartouche intérieur ayant une ouverture pour l'écoulement du fluide.

5. Cartouche de filtre selon la revendication 4, incluant un collier annulaire extérieur (24) capable d'être attaché de façon détachable dans ladite cartouche de filtre, ayant une lèvre inférieure pour l'insertion dans ladite gorge annulaire intérieure de ladite cartouche de filtre.

6. Cartouche de filtre selon la revendication 5, dans laquelle ledit collier annulaire extérieur (24) a un pas de vis à double filet (26) sur une surface intérieure pour être attaché de façon détachable sur un collecteur de filtre.

7. Cartouche de filtre selon la revendication 4, dans lequel ladite extrémité de sommet inclut une lèvre annulaire sur ladite paroi du boîtier, avec au moins une fente longitudinale formée dans celle-ci.

8. Cartouche de filtre selon la revendication 4, dans laquelle ladite extrémité de sommet inclut une lèvre annulaire sur ladite paroi de boîtier, avec une pluralité de fentes longitudinales formées dans celle-ci et également espacées les unes des autres.

9. Cartouche de filtre selon la revendication 4, comprenant en outre un collier annulaire extérieur (24) ayant une surface extérieure, et une surface intérieure, une extrémité de sommet et une extrémité de fond, ledit collier annulaire extérieur pouvant être attaché de façon détachable dans la cartouche de filtre sur ladite extrémité de fond du collier annulaire extérieur et pouvant être attaché de façon détachable sur un collecteur (12) sur ladite extrémité de sommet du collier annulaire extérieur, ledit collier annulaire extérieur (24) comprenant :
un pas de vis à double filet (26) sur ladite surface intérieure, adapté à s'accoupler avec un connecteur à pas de vis extérieur correspondant sur ledit collecteur (12) ; et
une portion de lèvre en extension sur ladite extrémité de fond du collier annulaire extérieur pour s'accoupler avec une gorge annulaire sur ledit boîtier de cartouche extérieur (22).

10. Cartouche de filtre selon la revendication 9, dans laquelle ledit pas de vis à double filet (26) inclut une circonférence, un premier filet, et un second filet, ledit premier et ledit second filet étant entremêlés et s'étendant approximativement autour de ladite circonférence, et tels que ledit premier filet est décalé par rapport audit second filet.

11. Cartouche de filtre selon la revendication 10, dans laquelle ledit premier filet est décalé par rapport audit second filet sur approximativement 180°.
